# EUROPÄISCHE PATENTANMELDUNG

(11) **EP 1 286 268 A1**
(43) Veröffentlichungstag der Anmeldung: **26.02.2003**
(21) Anmeldenummer: 01440276.2
(22) Anmeldetag: 21.08.2001
(51) Int. Cl.: G06F 12/06

(54) **Integrierte Schaltung mit Zuordnung von Adressbereichen**

(71) Anmelder: ALCATEL, 75008 Paris (FR)
(72) Erfinder: Pertry, Carl Roger, 71282 Hemmingen (DE); Gendarme, Christophe, 2000 Antwerpen (BE)
(74) Vertreter: Menzietti, Domenico, Dipl.-Ing

(57) **Zusammenfassung**

Aufgabe der Erfindung ist es, die Vergabe von Adressbereichen an Module (3, 13, 14) einer integrierten Schaltung zu optimieren. Durch die erfindungsgemäße Auswählbarkeit der Adressbereiche im Adressraum über eine zentrale Adressverwaltung (11) kann die Ausnutzung der Kapazität des Adressraums angepasst an die aktuelle Auslastung optimiert werden. Eine flexible Ausnutzung des Adressraums ist durch Wahl der Position des auszuwählenden Adressbereichs und der Größe des Adressbereichs ermöglicht. Die Zuordnung der Adressbereiche kann durch ein Softwareprogramm automatisch erfolgen. Das Softwareprogramm ist beispielsweise derart ausgelegt, dass es eine faire Verteilung der Adressbereiche auf die vorhandenen Module (3, 13, 14) bzw. diejenigen Module (3, 13, 14), die aktuell eine Adressbereich benötigen, ausführt. Solange es keine Überlappungen mit anderen Adressbereiche gibt, können zuzuordnende Adressbereiche beliebig gewählt werden. Durch eine benutzerspezifische Programmierung können einzelnen Modulen (3, 13, 14) besondere Adressbereiche zugewiesen werden.

## Beschreibung

Die Erfindung betrifft eine integrierte Schaltung.

Integrierte Schaltungen sind z.B. als System-on-Chip auf einem ASIC ausgeführt; ASIC = Application Specific Integrated Circuit. Ein ASIC beinhaltet spezielle Schaltkreise, die an Kundenwünsche adaptiert sind. Diese erfüllen spezielle Aufgaben. In der Telekommunikation dienen sie beispielsweise der Verarbeitung von VolP- Signalen, DSL-, ATM-, SDH-, SONET, UMTS-, GSM-, LMDS- oder ISDN-Signalen; VolP = Voice over Internet Protocol, DSL = Digital Subscriber Line, ATM = Asynchronous Transfer Mode, SDH = Synchronous Digital Hierarchy, SONET = Synchronous Optical Network, UMTS = Universal Mobile Telekommunikation System, GSM = General system Mobile, LMDS = Local Multipoint Digital System, ISDN = Integrated Services Digital Network. Sie dienen somit der Verarbeitung von Sprache, Daten, Video, Internet-Webpages, etc.

Eine integrierte Schaltung hat z.B. eine spezielle Prozessorplattform zur Ausführung von generellen, aber auch applikationsspezifischen Aufgaben. Diese Prozessorplattform kann für beliebige Anwendungen genutzt werden; die selbe Prozessorplattform beispielsweise in DSL-Chips, ATM-Chips, etc. Sie beinhaltet einen Prozessor und stellt Rechenkapazität zur Verfügung.

Die Prozessorplattform hat mehrere Bausteine, wobei einige Bausteine an einen schnellen AMBA-AHB Bus angeschlossen sind, z.B. ein Prozessor, ein ROM Controller, ein RAM Controller, und andere Bausteine an einen langsamen AMBA-APB Bus angeschlossen sind, z.B. ein Interrupt Controller, ein Real Time Counter; ROM = Read Only Memory, RAM = Random Access Memory. Der Frage welcher Baustein an welchen Bus angeschlossen wird, hängt von der Zugriffgeschwindigkeit, der Verarbeitungsgeschwindigkeit und der Häufigkeit der Verwendung des Bausteins ab.

Für manche Bausteine, wie z.B. den ROM Controller und den RAM Controller, die im folgenden als Module bezeichnet werden, sind Adressbereiche beinhaltend mehrere Adressen zu vergeben. Für jedes Modul wird ein vorbestimmter Adressbereich innerhalb eines Adressraums vor Inbetriebnahme reserviert. Zusätzlich ist ein Adressbereich doppelt belegt, zum einen für den ROM Controller und zum anderen für den RAM Controller. Ein Speicher Management weist den zusätzlich festgelegten Adressbereich zunächst dem ROM Controller zu. Wird der Adressbereich für den ROM Controller nicht mehr benötigt, z.B. nach dem Boot Vorgang, so erfolgt eine einmalige Umschaltung zwecks Zuweisung des festgelegten Adressbereichs an den RAM Controller.

Aufgabe der Erfindung ist es, die Vergabe von Adressbereichen zu optimieren.

Gelöst wird diese Aufgabe durch eine integrierte Schaltung nach Anspruch 1. Durch die Auswählbarkeit der Adressbereiche im Adressraum kann die Ausnutzung der Kapazität des Adressraums angepasst an die aktuelle Auslastung optimiert werden. Eine flexible Ausnutzung des Adressraums ist durch Wahl der Position des auszuwählenden Adressbereichs und der Größe des Adressbereichs ermöglicht. Die Zuordnung der Adressbereiche kann durch ein Softwareprogramm automatisch erfolgen. Das Softwareprogramm ist beispielsweise derart ausgelegt, dass es eine faire Verteilung der Adressbereiche auf die vorhandenen Module bzw. diejenigen Module, die aktuell eine Adressbereich benötigen, ausführt. Solange es keine Überlappungen mit anderen Adressbereiche gibt, können zuzuordnende Adressbereiche beliebig gewählt werden. Durch eine benutzerspezifische Programmierung können einzelnen Modulen besondere Adressbereiche zugewiesen werden.

Ein spezielles Pause und Reset Modul für den Boot Vorgang wird nicht mehr benötigt. Dieses Modul ist ohne die flexible Adressverwaltung zwingend erforderlich, um die Umschaltung von ROM auf RAM während des Bootvorgangs zu ermöglichen.

Vorteilhafte Ausgestaltungen sind den abhängigen Ansprüchen und der nachfolgenden Beschreibung zu entnehmen.

Im folgenden wird die Erfindung anhand eines Ausführungsbeispiels und unter Zuhilfenahme einer Figur erläutert.

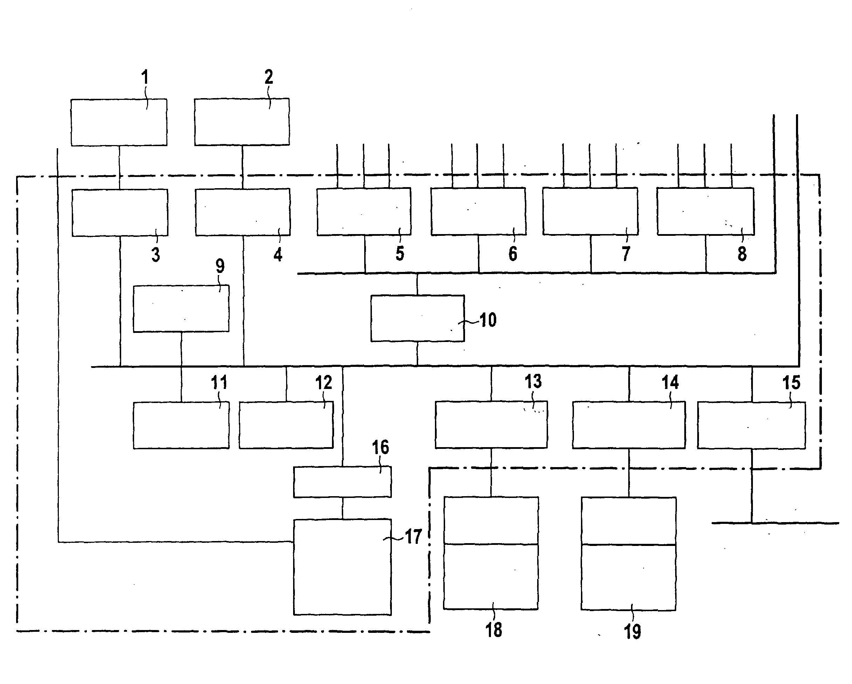

Die Figur zeigt einen schematisch dargestellten Ausschnitt aus einer erfindungsgemäßen integrierten Schaltung.

Der Ausschnitt zeigt eine mit CleanDMEP bezeichnete Prozessorplattform und mehrere mit der Prozessorplattform verbundene Module; CleanDMEP = Clean Design Methodology for Embedded Processors. Die Prozessorplattform ist eine allgemeine Plattform und kann für beliebige Verarbeitungen eingesetzt werden, z.B. in der Telekommunikation, im Maschinenbau, in der Luft- und Raumfahrt, etc; in der Telekommunikation beispielsweise bei allen Formen des XDSL, bei UMTS, VolP, etc.

Die integrierte Schaltung ist z.B. als System-on-Chip auf einem ASIC ausgeführt. Sie beinhaltet zum einen die spezielle Prozessorplattform mit einem Prozessor 17, drei AHB Master und/oder Slave Module 3, 13, 14 und eine zentrale Adressverwaltung 11, die über einen Bus AMBA-AHB miteinander verbunden sind. Modul 3 ist z.B. als SDRAM Controller ausgeführt, Modul 13 als ROM Controller und Modul 14 als RAM Controller. Die Adressverwaltung 11 beinhaltet die drei Adressbereiche für die drei Module 3, 13, 14. Der Bus ist z.B. als schneller Bus ausgelegt, z.B. als AMBA-AHB Bus.

Es ist ein Adressraum mit einer vorgegebenen Kapazität vorgesehen. Der Adressraum hat beispielsweise die Größe 4 Gbyte. Für ein ROM werden beispielsweise 32 kbyte benötigt. Diese 32 kbyte können nun beliebig im 4 Gbyte Adressraum verschoben werden. Das Verschieben erfolgt durch physikalisches Umsetzen der Adressen. Für ROM und RAM sind beispielsweise jeweils 32 kbyte vorgesehen. Solange sich die beiden 32 kbyte Adressbereiche nicht überschneiden, kann ihre Lage innerhalb des 4 Gbyte Adressraums beliebig gewählt werden.

Die Adressverwaltung 11 ist geeignet, eine variable Zuordnung von unterschiedlichen Adressbereichen eines Adressraums zu mindestens zwei Modulen durchzuführen.

Sowohl die Position eines Adressbereichs innerhalb des Adressraums als auch die Größe des Adressbereichs ist durch ein Softwareprogramm auf dem Prozessor 17 und die Adressverwaltung 11 wählbar ist. Das Softwareprogramm ist z.B. in der Programmiersprache C oder C++ programmiert. Das Softwareprogramm wählt die Position und die Größe eines Adressbereichs selbstständig aus. Zunächst wird beispielsweise die Größe anhand einer für jedes Modul abgespeicherten Tabelle beinhaltend Modul-ID und benötigter Adressbereichsgröße ermittelt. Anschließend wird eine geeignete Position für einen Adressbereich der benötigten Größe ermittelt. Durch Scannen des Adressraums, der durch belegte und unbelegte Bereiche gekennzeichnet ist, z.B. durch ein entsprechend gesetztes oder ungesetztes Bit, wird ein freier Adressbereich der benötigten Größe ermittelt. Der zuerst aufgefundene Adressbereich der benötigten Größe wird ausgewählt und belegt sowie dem Modul zugewiesen. Wird beim Scannen kein freier Adressbereich der benötigten Größe ermittelt, wird eine Umverteilung der belegten Adressbereiche durchgeführt. Lücken, d.h. unbelegte Bereiche, zwischen belegten Adressbereichen werden durch Verschieben von belegten Adressbereichen geschlossen. Nach dem Umverteilen sind alle noch vorhandenen unbelegten Adressen in den hinteren Bereich des Adressraums verschoben. Ist nun in diesem hinteren Adressraum ein Adressbereich der benötigten Größe vorhanden, so wird dieser belegt und zugewiesen. Ist immer noch kein Adressbereich der benötigten Größe vorhanden, so wird überprüft, ob in der Tabelle gegebenenfalls ein kleinere Adressbereichsgröße für das entsprechende Modul abgespeichert ist. In der Tabelle sind z.B. ein, zwei oder mehr Adressbereichsgrößen für jedes Modul abspeicherbar. Ist eine geringe Verkehrslast auf dem AMBA-AHB Bus oder ist eine geringe Anzahl geschützter Bereiche vorhanden, so werden jeweils die größeren Adressbereichsgrößen ausgewählt, bei einer größeren Verkehrlast bzw. bei einer großen Anzahl geschützter Bereiche die kleineren. Dies erhöht die Verarbeitungsgeschwindigkeit. Ist im Adressraum ein Adressbereich der benötigten kleineren Größe vorhanden, so wird dieser ausgewählt, belegt und zugewiesen. Ist im Adressraum ein Adressbereich der benötigten kleineren Größe nicht vorhanden, so werden die Adressgrößen der bereits belegten Adressbereiche sukzessive mit Auswahl über die Tabelle verkleinert, bis ein entsprechender Adressbereich der benötigten kleineren Größe unbelegt ist. Dieser wird dann zugewiesen. Die Größe des Adressraums ist z.B. so ausgelegt, dass allen Modulen ein Adressbereich zumindest der kleinsten Größe zuweisbar ist.

Mittels eines speziellen Softwareprogramms und einer GUI (Graphical User Interface) kann ein Benutzer die anfängliche Belegung einzelner Adressbereiche bestimmen. Z.B. soll für einen SDRAM Controller ein größerer Adressraum zur Verfügung stehen als für einen RAM Controller. Dies kann vom Benutzer festgelegt werden. Individuelle Adressraumkonfigurationen, z.B. angepasst an die besondere Topologie einer speziellen Prozessorplattform sind durch den Benutzer programmierbar.

Des weiteren ist z.B. mindestens ein Baustein 5, 6, 7, 8 vorgesehen, der über einen AMBA-APB Bus und eine Brücke 10 mit dem AMBA-AHB Bus verbunden ist. Die Adressverwaltung 11 ist optional geeignet, eine variable Zuordnung von unterschiedlichen Adressbereichen des Adressraums zu mindestens einem Baustein 5, 6, 7, 8 durchzuführen.

Im folgenden wird der allgemeine Aufbau der Prozessorplattform erläutert.

Die Prozessorplattform beinhaltet einen SDRAM Controller 3, der zum einen mit dem schnellen, internen Bus AMBA-AHB verbunden ist und zum anderen mit einem internen, aber außerhalb der Prozessorplattform angeordneten SDRAM 1. Intern bedeutet innerhalb der integrierten Schaltung, extern außerhalb der integrierten Schaltung. Das Modul 3, ausgeführt als SDRAM Controller, steuert den Zugriff aufs SDRAM 1 und führt die erforderliche Konversion aufs Busprotokoll durch. Das SDRAM 1 kann auch außerhalb der integrierten Schaltung angeordnet werden, also extern.

Die Prozessorplattform beinhaltet ferner einen Static Memory Interface 4, das zum einen mit dem schnellen, internen Bus AMBA-AHB verbunden ist und zum anderen mit einem internen, aber außerhalb der Prozessorplattform angeordneten SRAM 2. Das Static Memory Interface 4 steuert den Zugriff aufs SRAM 2 und führt die erforderliche Konversion aufs Busprotokoll durch. Das SRAM 2 kann auch außerhalb der integrierten Schaltung angeordnet werden, also extern.

Ferner ist ein Interrupt Controller 5 vorgesehen, der zum einen mit einem langsamen, internen, z.B. als AMBA-APB ausgeführten Bus verbunden ist und zum anderen mindestens eine Schnittstelle zu einem internen oder externen, aber außerhalb der Prozessorplattform angeordneten Modul aufweist. Der Interrupt Controller 5 dient dazu, Interrupts von Modulen auserhalb der Plattform mit dem Prozessor zu verbinden.

Ferner ist ein UART 6 vorgesehen, der zum einen mit dem langsamen, internen AMBA-APB Bus verbunden ist und zum anderen eine Schnittstelle zu einem externen Host-Prozessor, der aber außerhalb der Prozessorplattform angeordnet ist, aufweist. Der UART 6 dient dazu, Daten zwischen dem externen Host Prozessor und dem internen Prozessor (17) zu uebertragen.

Ferner ist ein GP I/O 7 vorgesehen, der zum einen mit dem langsamen, internen AMBA-APB Bus verbunden ist und zum anderen mindestens eine Schnittstelle zu einem internen oder externen, aber außerhalb der Prozessorplattform angeordneten Modul aufweist. Der GP I/O 7 dient dazu, Steuerinformationen zwischen Modulen auserhalb der Plattform und dem internen Prozessor 17 zu übertragen; GP I/O = General Purpose In/Out.

Ferner ist ein Real Time Counter 8 vorgesehen, der zum einen mit dem langsamen, internen AMBA-APB Bus verbunden ist und zum anderen mindestens eine Schnittstelle zu einem internen oder externen, aber außerhalb der Prozessorplattform angeordneten Modul aufweist. Der Real Time Counter 8 dient als Timer, der mit dem Systemclock laeuft.

Des weiteren ist eine Register Bank 9 vorgesehen, die mit dem schnellen AMBA-AHB Bus verbunden ist. Die Register Bank 9 stellt Register für mehrere Module zur Verfügung, darunter z.B. Modul 14, ausgeführt als RAM Controller und Modul 3, ausgeführt als SDRAM Controller.

Ein Arbiter 12, der mit dem schnellen AMBA-AHB Bus verbunden ist, dient dazu, bei gleichzeitigem Zugriff mehrerer Master auf den schnellen Bus, diese Zugriffe zu priorisieren und in der priorisierten Reihenfolge abzuarbeiten.

Der Prozessor 17 ist z.B. als Mikroprozessor oder als Digitaler Signalprozessor ausgeführt. Er ist eventuell über einen AHB Wrapper mit dem schnellen AMBA-AHB Bus verbunden. Der AHB Wrapper 16 führt bei Bedarf die nötige Konversion der Protokolle durch.

Das Modul 13 ist z.B. als ROM Controller, der zum einen mit dem schnellen AMBA-AHB Bus verbunden ist und zum anderen mit einem außerhalb der Prozessorplattform angeordneten internen ROM 18, das auch ein BIST enthalten kann; BIST = Build-In Self Test.

Der ROM Controller steuert den Zugriff aufs interne ROM 18 und führt die erforderliche Konversion auf Busprotokoll durch.

Der Modul 14, ausgeführt als RAM Controller, ist zum einen mit dem schnellen, internen Bus AMBA-AHB verbunden und zum anderen mit einem internen, aber außerhalb der Prozessorplattform angeordneten SRAM 19. Der RAM Controller steuert den Zugriff aufs SRAM 19 und führt die erforderliche Konversion auf Busprotokoll durch. Das SRAM 19 kann auch ein BIST enthalten.

Ferner ist eine Brücke 10 vorgesehen. Brücke 10 verbindet den schnellen AMBA-AHB Bus mit dem langsamen AMBA-APB Bus. Über die Brücke 10 wird somit eine Verbindung zwischen den am AMBA-AHB Bus angeschlossenen Modulen und den am AMBA-APB Bus angeschossenen Modulen hergestellt. So hat Prozessor 17 über Brücke 10 z.B. Zugriff auf den Interrupt Controller 5. Die Aufteilung mit zwei Bussen mit unterschiedlichen Verarbeitungsgeschwindigkeiten hat den Vorteil, dass langsame Zugriffe nicht schnelle Zugriffe behindern. Brücke 10, AMBA-APB Bus und die daran angeschlossenen Module sind optional. Werden die Funktionalitäten der Module nicht benötigt können sie und der AMBA-APB Bus sowie die Brücke 10 beim Design weggelassen werden, was zu einer Platzeinsparung und zur Reduzierung von Herstellungskosten führt.

Der Prozessor 17 hat einen Verbindung zu einem JTAG= Joint Test Action Group. Das JTAG Interface kann zum Debuggen der SW auf dem internen Prozessor verwendet werden, aber auch waehrend der Fertigungskontrolle des ASICs.

Der AMBA-APB Bus kann intern, außerhalb der Prozessorplattform weitergeführt sein und gegebenenfalls auch extern, außerhalb der integrierten Schaltung.

Der AMBA-AHB Bus kann intern, außerhalb der Prozessorplattform weitergeführt sein und gegebenenfalls auch extern, außerhalb der integrierten Schaltung.

Im Ausführungsbeispiel ist eine spezielle Prozessorplattform dargestellt. Die Erfindung kann auf jede Prozessorplattform angewendet werden, insbesondere eine Prozessorplattform mit weniger oder mehr Elementen als die in der Fig. dargestellte. Die integrierte Schaltung kann auch mehr als einen Prozessor, mehr als einen Steuereingang und mehr als einen externen Speicher aufweisen. Sind beispielsweise zwei Prozessoren über eine gemeinsame Adressverwaltung verwaltet, so können ein Steuereingang und ein externer Speicher für beide Prozessoren ausreichend sein. Außer der speziellen Prozessorplattform können auf der integrierten Schaltung noch weitere Prozessoren und Module angeordnet sein, die auch den Großteil der integrierten Schaltung, z.B. 80%, ausmachen können, so dass z.B. nur 20% auf die Prozessorplattform entfällt. Die integrierte Schaltung kann auch zwei oder mehr Prozessorplattformen beinhalten.

Im Ausführungsbeispiel sind die Module als ROM-, RAM- und SDRAM-Controller ausgeführt. Ein Modul kann z.B. auch ein DRAM, PROM, EPROM oder EEPROM ausgeführt sein; PROM = Programmable ROM, EPROM = Erasable PROM, EEPROM = Electrically EPROM.

Beim Ausführungsbeispiel sind chipintern AMBA Busse verwendet und chipextern AMBA Busse und/oder ein PCI Bus. Chipintern können z.B. auch verwendet werden: CoreConnect Bus, CoreFrame Bus, FlSPbus oder IPbus. Chipextern können z.B. auch verwendet werden: VMEbus, USB Bus, usw. Anstelle eines oder zwei Busse zur chipinternen Verbindung der Bausteine können auch drei oder mehr Busse verwendet werden, z.B. ein Extra-Bus für die Verknüpfung des Arbiters mit mehreren Bausteinen. Die Prozessoren sind beispielsweise als ARM, Intel oder AMD Prozessoren ausgeführt.

Abkürzungen:
AMBA = Advanved Micro-controller Bus Architecture,
AHB = Advanced High-performance Bus,
APB = Advanced Peripheral Bus,
ARM = Advanced RISC Machine,
VHDL = VHSIC Hardware Description Language.

## Patentansprüche

1. Integrierte Schaltung, insbesondere ein System-on-Chip, beinhaltend eine spezielle Prozessorplattform (CleanDMEP) mit einem Prozessor (17), mindestens zwei Module (3, 4, 13, 14) und einer Adressverwaltung (11), die über einen Bus (AMBA-AHB) miteinander verbunden sind, wobei die Adressverwaltung (11) geeignet ist, eine variable Zuordnung von unterschiedlichen Adressbereichen eines Adressraums zu mindestens zwei der mindestens zwei Module (3, 4, 13, 14) durchzuführen.

2. Integrierte Schaltung nach Anspruch 1, **dadurch gekennzeichnet, dass** sowohl die Position eines Adressbereichs innerhalb des Adressraums als auch die Größe des Adressbereichs durch ein Softwareprogramm auf dem Prozessor (17) und/oder die Adressverwaltung (11) wählbar ist.

3. Integrierte Schaltung nach Anspruch 1, **dadurch gekennzeichnet, dass** mindestens ein Modul (3, 13, 14) als Controller ausgeführt ist.

4. Integrierte Schaltung nach Anspruch 1, **dadurch gekennzeichnet, dass** ein Modul (3, 13, 14) als ROM Controller, ein weiteres Modul (3, 13, 14) als RAM Controller und ein weiteres Modul (3, 13, 14) als SDRAM Controller ausgeführt ist.

5. Integrierte Schaltung nach Anspruch 1, **dadurch gekennzeichnet, dass** der Bus (AMBA-AHB) als AMBA-AHB Bus ausgeführt ist.

6. Integrierte Schaltung nach Anspruch 6, **dadurch gekennzeichnet, dass** der Prozessor (17) über einen AHB Wrapper (16) mit dem AMBA-AHB Bus verbunden ist.

7. Integrierte Schaltung nach Anspruch 6, **dadurch gekennzeichnet, dass** in der Prozessorplattform (CleanDMEP) mindestens ein Baustein (5, 6, 7, 8) vorgesehen ist, der über einen AMBA-APB Bus und eine Brücke (10) mit dem AMBA-AHB Bus verbunden ist, und dass die Adressverwaltung (11) geeignet ist, eine variable Zuordnung von unterschiedlichen Adressbereichen des Adressraums zu mindestens einem des mindestens einen Bausteins (5, 6, 7, 8) durchzuführen.
